Europäisches Patentamt

European Patent Office

Office européen des brevets

(19)

(11) Publication number: **0 143 090**
**A1**

(12) # EUROPEAN PATENT APPLICATION

(21) Application number: **84850296.9**

(22) Date of filing: **05.10.84**

(51) Int. Cl.⁴: **F 16 D 1/00**

(30) Priority: **22.11.83 SE 8306443**

(43) Date of publication of application:
**29.05.85 Bulletin 85/22**

(84) Designated Contracting States:
**DE FR GB IT NL**

(71) Applicant: **Flygt AB
Box 1309
S-171 25 Solna(SE)**

(72) Inventor: **Eriksson, Magnus
Sandfjärdsgatan 15II
S-121 70 Johanneshov(SE)**

(74) Representative: **Larsson, Sten
Flygt AB Box 1309
S-171 25 Solna(SE)**

(54) **A sleeve joint.**

(57) The invention concerns a sleeve joint for driving an impeller on a rotatable shaft.

According to the invention a sleeve (3) between the shaft (1) and the impeller (6) is provided with a closed groove (4) for a wedge arranged in a conventional groove (2) in the shaft (1). Due to its closed form the groove (4) is less sensitive to damages at sudden stops.

EP 0 143 090 A1

./...

# A Joint

This invention concerns a sleeve joint for driving an impeller on a rotatable shaft.

When driving rotating pump impellers it is often suitable to build in a security device in the joint between the driving shaft and the driven body, which security device is released in case of a sudden stop. This is to deminish the risks for damages on the driving unit and the shaft.

One way to obtain this security function is to arrange a driving pin in the joint, which pin is broken at a sudden stop letting the shaft free to rotate even when the driven body stands still. The driving pin is then normally arranged in a hole in the driven body and in a hole in a sleeve on the shaft which sleeve is driven via a wedge joint. The play between the driven body and the sleeve is then so wide that they are allowed to rotate independently of each other.

It shows however, that the construction often does not work in the expected manner. When the pin has been broken due to the fact the driven body (the impeller) has got stuck, the sleeve is often split up along the groove, thus eliminating the play between sleeve and impeller. This means that driving unit and driving shaft may be seriously damaged before the electric safety disconnection switch has had the time to release. A frequent damage is a bent driving shaft.

According to the invention the problem to ensure a free relative movement between the sleeve and the impeller in case the driving pin is broken is solved by designing the groove in the sleeve as a closed hole.

The invention is described more closely below with reference to the enclosed drawing.

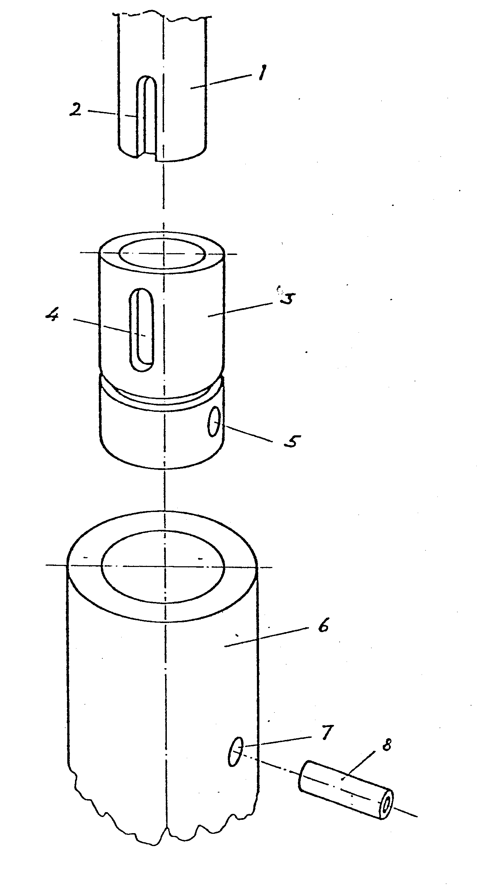

In the drawing 1 stands for a driving shaft having a groove 2 for a wedge. 3 stands for a sleeve having a groove 4 and a hole 5. 6 stands for a driven body (impeller) having a hole 7 for a driving pin 8.

The driving unit 1 is thus provided with a groove 2 for a wedge which ensures a rotary proof connection between shaft and sleeve, the latter having a corresponding groove 4.

The driven body (the impeller) 6 is mounted on the sleeve 3 and locked axially by help of a bolt. The impeller 6 and the sleeve 3 have corresponding holes 5 and 7 resp for a driving pin 7.

At normal conditions the impeller is thus rotary proof attached to the driving unit and pumping is carried out in the normal way. If the pumped medium contains solid bodies making the impeller to an instant stop, the driving pin is broken and the driving shaft and the sleeve are allowed to rotate thus eliminating damage of the driving unit and the shaft. A condition is however, that the sleeve is undamaged. Sleeves used until now have been provided with open wedge grooves reaching one end of the sleeve, thus having the tendency of being split up along the groove. This means that the play between sleeve and shaft has been eliminated and corotation occurs. The sleeve according to the invention will, on the contraty, be kept intact thus ensuring a free rotating of shaft and sleeve.

0143090

CLAIMS

A sleeve joint including a rotatable shaft (1) having a wedge groove (2), a body (6) rotating with the shaft and an intermediate sleeve (3) having a wedge groove (4), a driving pin function incorporated between the sleeve and the corotating means (6), c h a r a c t e r i z e d  in that the groove (4) has a closed form in the sleeve wall.

A sleeve joint according to claim 1, c h a r a c t e r i z e d in that the groove (4) in the sleeve (3) is directed avially, its ends being so far away from the ends of the sleeve (3), that the latter are uninterrapted at a widht which at least corresponds with the thickness of the sleeve wall.

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 504 501 (CONN)<br><br>* The whole document *<br><br>--- | 1,2 | F 16 D 1/00 |
| X | US-A-3 476 420 (CONN)<br><br>* The whole document *<br><br>--- | 1,2 | |
| A | FR-A-2 181 125 (GIRARD TRANSMIS-SIONS)<br><br>* The whole document *<br><br>--- | 1,2 | |
| A | GB-A- 194 272 (MOTEURS SALMSON)<br><br>----- | | |

|  | TECHNICAL FIELDS SEARCHED (Int. Cl.4) |
|---|---|
|  | F 16 D 1/00 |

The present search report has been drawn up for all claims

| Place of search | Date of completion of the search | Examiner |
|---|---|---|
| THE HAGUE | 15-02-1985 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82